# EUROPEAN PATENT SPECIFICATION

(11) **EP 1 420 951 B1**
(45) Date of publication and mention of the grant of the patent: **23.03.2005**
(21) Application number: 02734398.7
(22) Date of filing: 14.05.2002
(51) Int. Cl.: B32B 27/36, C08J 5/18, C08L 67/04, G09F 3/02

(54) **MULTILAYER SLEEVE LABELS**
MEHRSCHICHTIGE ETIKETTHÜLSE
ETIQUETTE MULTICOUCHES EN FORME DE GAINE

(30) Priority: 17.08.2001 US 932523
(43) Date of publication of application: 26.05.2004
(73) Proprietor: Exxonmobil Oil Corporation, Baytown, Texas 77520 (US)
(72) Inventor: KONG, Dan-Cheng, Fairport, NY 14450 (US)
(74) Representative: Dew, Melvyn John
(86) International application number: PCT/US2002/015110
(87) International publication number: WO 2003/016053

(56) References cited:
- US-A- 5 866 634
- DATABASE WPI Section Ch, Week 200134 Derwent Publications Ltd., London, GB; Class A23, AN 2001-324676 XP002212763 & JP 2001 088261 A (OKURA IND CO LTD), 3 April 2001 (2001-04-03)
- DATABASE WPI Section Ch, Week 200137 Derwent Publications Ltd., London, GB; Class A23, AN 2001-347456 XP002212764 & JP 2001 011214 A (OKURA IND CO LTD), 16 January 2001 (2001-01-16)
- DATABASE WPI Section Ch, Week 199705 Derwent Publications Ltd., London, GB; Class A23, AN 1997-047138 XP002212765 & JP 08 300481 A (MITSUBISHI RAYON CO LTD) , 19 November 1996 (1996-11-19)
- DATABASE WPI Section Ch, Week 200155 Derwent Publications Ltd., London, GB; Class A23, AN 2001-499436 XP002212766 & JP 2001 151906 A (MITSUBISHI PLASTICS IND LTD), 5 June 2001 (2001-06-05)
- DATABASE WPI Section Ch, Week 200151 Derwent Publications Ltd., London, GB; Class A23, AN 2001-468278 XP002212767 & JP 2001 151907 A (MITSUBISHI PLASTICS IND LTD), 5 June 2001 (2001-06-05)
- DATABASE WPI Section Ch, Week 200166 Derwent Publications Ltd., London, GB; Class A23, AN 2001-586209 XP002212768 & JP 2001 171059 A (MITSUBISHI PLASTICS IND LTD), 26 June 2001 (2001-06-26)

## Description

### BACKGROUND OF THE INVENTION

### Field of the Invention

The invention relates to a film comprising a base layer that comprises polylactic acid and a toughening agent, and a skin layer prepared from a polylactic acid. The invention also relates to a process for the manufacture of a film of this type and its use as a label.

### Description of the Prior Art

In many label applications, it is desirable that the label stock from which the labels are cut is a film of polymeric material rather than paper. Polymeric film can provide properties lacking in paper, such as durability, strength, water resistance, abrasion resistance, gloss, transparency and other properties. Obviously, the polymeric material must meet the practical requirements of commercial manufacture and use. Material costs must be competitive. The film must be formable by a suitable commercial process such as cast film extrusion or blown film extrusion, requiring that the molten film material be flowable to the correct degree to accomplish proper film formation. The formed film must be capable of hot-stretching without deleterious effect, since it is generally advantageous to hot-stretch and anneal the formed film, so as to orient the film and impart a stiffness to the film that is different in machine and cross directions.

It is already known to surround cylindrical or generally cylindrical packaging units, such as bottles or cans, with overall labels covering their entire circumference; these overall labels are called sleeves. The films used for this purpose are, for example, made of polyethylene, polybutylene, polystyrene, polyethylene-polypropylene copolymers, ethylene-vinyl acetate copolymers and various blends, but in particular of polyvinyl chloride. To obtain shrink properties of the films in the circumferential direction of the overall labels, which are appropriate for the intended purpose, the films are in general biaxially stretch-oriented, for example, according to the bubble, stenter or calender process, particular attention being paid to orientation in the transverse direction. In order to ensure an absolutely crease-free, close contact between the overall label and the packaging unit, the shrink values required are, for example: transverse shrink about 15 to 40% and longitudinal shrink not more than 2 to 5%, at a temperature of 90°C and a treating time of 15 minutes in a circulating air oven.

In addition, the shrink films are provided with a printing, for example by the reverse printing process, and are subsequently glued or welded to form a tubing. Due to the controlled transverse shrink, the tubing shrinks tightly and crease-free around the packaging unit in the shrink tunnel. The label is applied automatically with the aid of brushes or optionally also by hand. In addition to the desired shrink, the overall labels can possess some of the following properties: high gloss, optical clarity, good slip and rigidity for the automatic application of the label, good printability and good weldability/bondability.

For an economical fabrication of overall labels it is also advantageous to have heat-sealable films. Compared with gluing or welding, less time is required for sealing and, in addition, it is possible to save material.

There has been a trend in the packaging industry, and particularly in the beverage segment thereof, to replace inventory stock of lithographically preprinted cans with blank cans which can be filled as desired, the specific labeling being done by applying to the container a printed label formed from a heat shrink film some time soon before or after the filling operation. This technique is particularly attractive, for example, to breweries who often bottle and package their products under a variety of trade names. By utilizing the shrink labeling process, these bottlers would no longer be required to stock a large inventory of pre-printed containers for each brand and could, instead, stock only unprinted containers together with a supply of the appropriate heat shrinkable printed film labels. Moreover, the presence of the film label around the can would provide additional protection against the printed cans rubbing together during transport. Thus, surfaces of conventional lithographed cans are sufficiently abrasive such that the continuous contact with surrounding cans during shipping after causes small holes to be found in the cans, resulting in "leakers" which must be discarded.

U.S. Patent No. 6,113,996 discloses a uniaxially heat-shrinkable, biaxially oriented, multilayer film having a polypropylene-containing core layer comprising at least 70 wt. % of said multilayer film and optionally, at least one polyolefin-containing skin layer adjacent said core layer, is prepared by biaxially orienting a coextrudate and therefore orienting said coextrudate by stretching 10 to 40 % in the machine direction. The core layer contains isotactic polypropylene and a sufficient amount of syndiotactic polypropylene to inhibit uniaxial heat shrinkage at temperature below about 50°C. The skin layer can be selected from the group consisting of polypropylene, ethylene-propylene copolymer, polyethylene, and ethylene-propylene-butylene terpolymer.

U.S. Patent No. 6,025,079 discloses a heat shrinkable multilayer film which includes a core layer including a blend having ethylene/propylene copolymer and propylene homopolymer, or ethylene/propylene/butene-1 terpolymer and propylene homopolymer; and two outer layers each including at least 50%, by weight of each respective outer layer, of ethylene/propylene/butene-1 terpolymer, ethylene/propylene copolymer, or a blend of ethylene/propylene/butene-1 terpolymer and ethylene/propylene copolymer.

U.S. Patent No. 5,709,937 discloses a machine-direction oriented polypropylene homopolymer and propylene copolymer films wherein.the propylene copolymer is one selected from the group consisting of propyleneethylene copolymers containing up to about 10% by weight of ethylene and propylene-1-butene copolymers containing up to about 15% by weight of 1-butene wherein the oriented films has an opacity of less than about 10% and a haze of about 10% or less in the machine-direction and in the cross-direction.

U.S. Patent No. 5,524,778 discloses a container of thermoplastic material having a label which substantially covers the visible outer surface of the body of the container. The container is made either as a single layer or multi-layer extrusion. The layer of the container which is visible from the outside is made from 10% to 100% recycled plastic. The label is made of substantially the same material as the container so that both may be recycled without removing the label.

U.S. Patent No. 5,443,895 discloses a transparent shrinkable film comprising a base layer prepared from propylene-containing polymers and a hydrocarbon resin. The base layer contains about 5 to 40% by weight of a propylene homopolymer, 0 to about 30% by weight of a hydrogenated hydrocarbon resin having a softening point in the range from about 80° to 125°C, and about 30 to 95% by weight of a random ethylene-propylene copolymer, the percentages being related to the total weight of the mixture. A top layer is arranged on either side of the base layer. The invention also describes a process for the manufacture of the film.

U.S. Patent No. 5,252,155 discloses a process for applying heat shrink film to containers comprising the steps of a) coating at least a portion of a heat shrinkable but unshrunken film segment with a reactive hot melt polyurethane adhesive having a free isocyante content greater than 2% and a viscosity less than 3000 cps at 225°F; b) applying the film to the longitudinal surface of the container; and, c) subjecting the container to heat to shrink the film onto the container so as to permanently affix it thereto.

U.S. Patent No. 6,183,814 discloses a coated paper product including a paper layer and a polymer layer, wherein the polymer layer includes a polylactide polymer composition having a ratio of Mz to Mn of greater than about 6. The polymer composition, when melted, exhibits a die swell of greater than about 1.25 for a melt flow index of greater than about 2. Polymer lactide compositions, methods of manufacturing the polymer composition and the coated paper product, and articles produced therefrom are also described.

U.S. Patent No. 6,168,857 discloses compositions and methods for manufacturing sheets having a starch-bound matrix reinforced with fibers and optionally including an inorganic mineral filler. Suitable mixtures for forming the sheets are prepared by mixing together water unmodified and ungelatinized starch granules, an auxiliary water-dispersible organic polymer, fibers, and optionally an inorganic mineral filler in the correct proportions to form a sheet having desired properties. The mixtures are formed into sheets by passing them between one or more sets of heated rollers to form green sheets. The heated rollers cause the auxiliary polymer to form a skin on the outer surfaces of the sheet that prevents the starch granules from causing the sheet to adhere to the rollers upon gelation of the starch. The green sheets are passed between heated rollers to gelatinize the starch granules, and then to dry the sheet by removing a substantial portion of the water by evaporation. The starch and auxiliary polymer form the binding matrix of the sheets with the fibers and optional inorganic filler dispersed throughout the binding matrix. The starch-bound sheets can be cut, rolled, pressed, scored, perforated, folded, and glued to fashion articles from the sheets much like paper or paperboard. The sheets are particularly useful in the mass production of containers, such as food and beverage containers.

U.S. Patent No. 6,153,276 discloses a heat-sealable lactic acid-based polymer laminates which have heat resistance of 60°C or above, high sealing strength and good biodegradability and are useful in various films, sheets, packaging containers, etc., comprising a base layer (I) made of a crystallized lactic acid-based polymer (A) and a sealing layer (II) made of an amorphous lactic acid-based polymer (B) having a softening point lower than the melting point of said lactic acid-based polymer (A), and films, sheets or packaging containers with the use of these laminates.

U.S. Patent No. 6,080,478 discloses a multi-layer material including a cellulose-based naturally decomposing basic layer, at least one polyhydroxyalkanoate layer on the basic layer and at least one biodegradable polylactide layer between the basic layer and the at least one polyhydroxyalkanoate layer.

### SUMMARY OF THE INVENTION

In accordance with the present invention, there is provided a polymer film possessing a low coefficient of friction, which comprises:
(a) a core layer comprising a polylactic acid and a toughening additive wherein the core layer comprises the interior of the film; and optionally
(b) a first skin layer comprising a polylactic acid, wherein the first skin layer is exterior to the core layer.

Accordingly, it is an object of the present invention to provide a multi-layer film comprising a core layer comprising a polylactic acid and a toughening additive and a skin layer comprising a polylactic acid, for use in sleeve labels, which has good bonding and shrinking characteristics, good optical and mechanical properties, and is sealable. A further object of the present invention is to provide a process for producing the foregoing film.

There has been provided, in accordance with one aspect of the present invention, a shrinkable film comprising a core layer comprising a polylactic acid and a toughening additive; an optional transition layer comprising a mixture of the core layer material and the skin layer material; and a skin layer comprising a polylactic acid.

In accordance with another aspect of the present invention there is provided a process for producing the foregoing film which comprises the steps of producing a film by coextrusion through a slot die, solidifying the cast film on a chill roll and orienting the film by stretching in the longitudinal and transverse directions, wherein longitudinal stretching is carried out at a temperature between about 60° C to about 138°C and at a stretching ratio of less than 3, and wherein transverse stretching is carried out at a temperature between about 90°C to about 138°C at a stretching ratio of more than 6.

Advantages of the thermoplastic label include one or more of the following:
1. High surface energy for printing
2. Lower shrink force than an OPP shrink label
3. A label material that is better for the environment than a polyolefin label.
4. A label that can be recycled with the plastic container without having to be removed.
5. Improved adhesion of a lap seal.
6. A sleeve label that has a solvent seal for a sleeve that does not shrink.
7. A label that can be used to replace printing in packaging and container applications.
8. A label with enhanced environmental appeal.
9. A label that exhibits enhanced shrinkage properties

Other objects, features and advantages of the present invention will become apparent to those skilled in the art from the following detailed description. It should be understood, however, that the detailed description and specific examples, while indicating preferred embodiments of the present invention, are given by way of illustration and not limitation. Many changes and modifications within the scope of the present invention may be made without departing from the spirit thereof, and the invention includes all such modifications.

### BRIEF DESCRIPTION OF THE DRAWINGS

The novel features believed characteristic of the invention are set forth in the appended claims. The invention itself however, as well as a preferred mode of use, further objects and advantages thereof, will best be understood by reference to the following detailed description of several illustrative embodiments when read in conjunction with the accompanying drawings, wherein:
Figure 1 is a cross sectional view of a five layered film;
Figure 2 is a cross sectional view of a three layered film;
Figure 3 is a cross sectional view of a four layered film; and
Figure 4 is a cross sectional view of a two layered film.

### DETAILED DESCRIPTION OF THE DRAWINGS

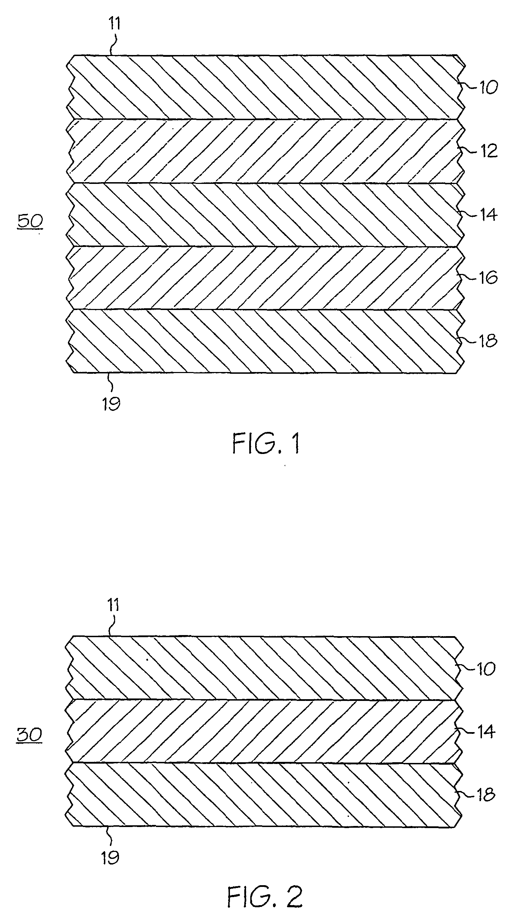

Referring now to Figure 1 is a cross sectional view of a five layered film **50.** The film **50** is comprised of a first surface **11,** a first skin layer **10,** a first intermediate or transition layer **12,** a core layer **14,** a second intermediate or transition layer **16,** a second skin layer **18,** and a second surface **19.**

The core layer **14** comprises a polylactic acid and a toughening additive.

In a specific embodiment, the first skin layer **10** also comprises a polylactic acid. In alternative embodiments, each of the first skin layer **10,** the first intermediate or transition layer **12,** the second intermediate or transition layer **16,** and/or the second skin layer **18** may comprise a polylactic acid and/or a toughening additive.

In a further embodiment of a five layered film **50,** the first surface **11** of the first skin layer **10** is treated and the first skin layer **10,** the first intermediate or transition layer **12,** the second intermediate or transition layer **16,** and/or the second skin layer **18** comprise a polylactic acid. Possible treatments for the first surface **11** include corona discharge, flame, and plasma treatment.

In a further embodiment of a five layered film **50,** the first surface **11** of the first skin layer **10** is treated, the second surface **19** of the second skin layer **18** is treated and the first skin layer **10,** the first intermediate or transition layer **12,** the second intermediate or transition layer **16,** and/or the second skin layer **18** comprise a polylactic acid. Possible treatments for the first surface **11** and the second surface **19** include corona discharge, flame, and plasma treatment

Referring now to Figure 2 is a cross sectional view of a three layered film **30.** The film **30** is comprised of a first surface **11,** a first skin layer **10,** a core layer **14,** a second skin layer **18,** and a second surface **19.**

The core layer **14** comprises a polylactic acid and a toughening additive.

In a specific embodiment of a three layered film **30,** the first surface **11** of the first skin layer **10** is treated and the first skin layer 10 also comprises a polylactic acid. In alternative embodiments, each of the first skin layer **10** and/or the second skin layer **18,** may comprise a polylactic acid and/or a toughening additive. Possible treatments for the first surface 11 include corona discharge, flame, and plasma treatment.

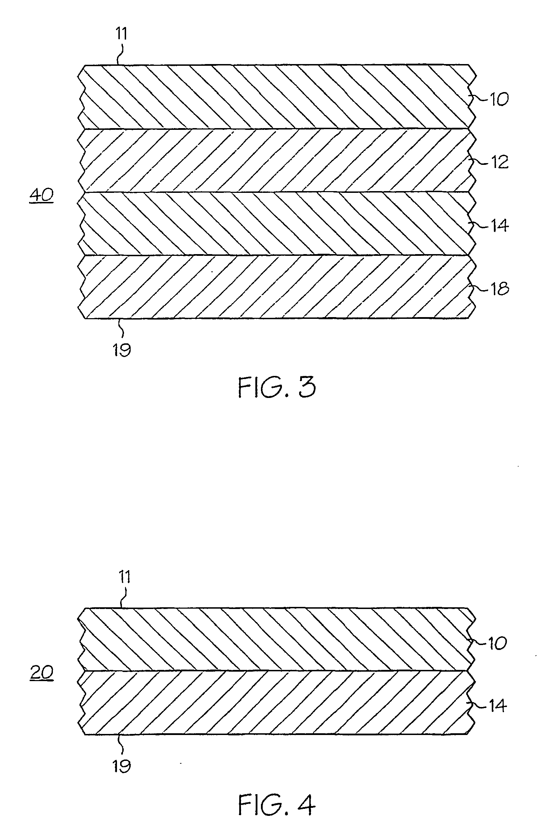

Referring now to Figure 3 is a cross sectional view of a four layered film **40.** The film **40** is comprised of a first surface **11,** a first skin layer **10,** a first transition layer **12,** a core layer **14,** a second skin layer **18,** and a second surface **19.**

The core layer **14** comprises a polylactic acid and a toughening additive.

In a specific embodiment of a four layered film **40,** the first surface **11** of the first skin layer **10** is treated.

Possible treatments for the first surface **11** include corona discharge, flame, and plasma treatment. In an alternative embodiment, each of the first skin layer **10,** the first transition layer **12,** and/or the second skin layer **18** may comprise a polylactic acid and/or a toughening additive

Referring now to Figure 4 is a cross sectional view of a two layered film **20.** The film **20** is comprised of a first surface **11,** a first skin layer **10,** a core layer **14,** and a second surface **19.**

The core layer **14** comprises a polylactic acid and a toughening additive.

In a specific embodiment of a three layered film **30,** the first surface **11** of the first skin layer **10** is treated and the first skin layer **10** also comprises a polylactic acid and/or a toughening additive. Possible treatments for the first surface **11** include corona discharge, flame, and plasma treatment.

In an embodiment, a one-layer film (not shown) may be produced. The-one-layer film comprises a core layer that comprises a polylactic acid and a toughening additive.

In one embodiment, the core layer **14** of film **50,** film **30,** and film **40** is a thermoplastic polymeric matrix material within which is preferably located a stratum of voids. From this it is to be understood that the voids create the matrix configuration. The opacity and low light transmission of the film may be enhanced by the addition to the core layer **14** of at least about 1% by weight and up to about 10% by weight of void initiating on opacifying compounds, which are added to the melt mixture of the core layer **14** before extrusion. Opacifying compounds which may be used include iron oxides, carbon black, aluminum, TiO₂, and talc. Although one embodiment has a strata of voids located in the core layer 14, it is possible to form an opaque core layer 14 that is substantially free of voids where the opacity is achieved by the addition of opacifying compounds.

In one embodiment, from about 3% to about 9% by weight of inorganic particulate material such as TiO₂ and/or talc is added to the melt mixture of the core layer **14** before extrusion.

In one embodiment, when forming the core layer **14,** as in U.S. Pat. Nos. 4,377,616; 4,632,869; 5,176,954; 5,397,635; 5,972,490; 4,758,396; 4,758,462; 4,652,489; 4,741,950; 4,594,211; and 6,004,664, a master batch technique can be employed by either forming the void initiating particles in situ or in adding preformed spheres to a molten thermoplastic matrix material. After the formation of a master batch, appropriate dilution of the system can be made by adding additional thermoplastic matrix material until the desired proportions are obtained. However, the components may also be directly mixed and extruded instead of utilizing a master batch method.

The void-initiating particles which are added as filler to the polymer matrix material of the core layer **14** can be any suitable organic or inorganic material which is incompatible with the core material at the temperature of biaxial orientation such as polybutylene terephthalate, nylon, solid or hollow preformed glass spheres, metal beads or spheres, ceramic spheres, calcium carbonate, COC's (cyclic olefin polymers and cyclic olefin copolymers), etc.

In another embodiment, the void-initiating particle material is incompatible with the core material, at least at the temperature of biaxial orientation. As a result of the biaxial orientation of the film structure herein, in addition to opacifying the core layer **14** of the structure, the orientation improves other physical properties of the composite layers such as flex-crack resistance, Elmendorff tear strength, elongation, tensile strength, impact strength and cold strength properties. The resulting film can have, in addition to a rich high quality appearance and excellent opacifying characteristics, low water vapor transmission rate characteristics and low oxygen transmission rate characteristics. This makes the film ideally suited for packaging food products including liquids. The film also has attractive utility as a decorative wrap material.

The polylactic acid, polymers contemplated as the material in the core layer **14** have a D-lactic acid level of 1% to 8%.

In a specific embodiment, a conventional filler and pigment such as titanium dioxide may be added to the core layer **14** and may be desirable for printing or graphic reproduction purposes. Generally, from an economic viewpoint at least it has not been considered to be of any particular advantage to use more than about 10% by weight of titanium dioxide to achieve a white label suitable for printing, although greater amounts could be added for greater opacity so long as there is no undue interference with achieving the desired properties of a thermoplastic label. It should be noted that the core layer may contain other materials in addition to the materials broadly described above, so long as these other materials do not unduly interfere with achieving the desired advantages of the invention.

The polymers contemplated as the material in the first skin layer **10** and/or second skin layer **18** are selected from the group consisting of polylactic acid, a toughening additive, and blends thereof. In one embodiment the polylactic acid has a D-lactic acid level of at least about 8%.

In one embodiment, the thickness of the first skin layer **10** and the second skin layer **18** is less than about 5 microns. In another embodiment, the thickness of the first skin layer **10** and the second skin layer **18** is less than about 2 microns. In a third embodiment, the thickness of the first skin layer **10** and the second skin layer 18 is less than about 1 micron.

The first skin layer **10** and the second skin layer 18 may be compounded with an anti-blocking effective amount of an anti-blocking agent, e.g., silica, clays, talc, glass, and the like, which may be provided in the form of approximately spheroidal particles. The major proportion of these particles, for example, anywhere from more than half to as high as 90 wt% or more, may be of such a size that a significant portion of their surface area, for example, from about 10 to about 70% thereof, will extend beyond the exposed first surface **11** or second surface **19**.

The first skin layer **10** and/or the second skin layer **18** can also contain pigments, fillers, stabilizers, light protective agents or other suitable modifying ingredients if desired.

The polymers contemplated as the material in the first transition layer **12** and/or second transition layer **16** may be selected from those polymers commonly used in film manufacture. In another embodiment, the material in the first transition layer **12** and/or second transition layer **16** is selected from the group consisting of polylactic acid, the material used in first skin layer **10** and/or the second skin layer **18,** the material used in the core layer **14,** and blends thereof.

In another embodiment, the first skin layer **10,** the first transition layer **12,** the core layer **14,** the second transition layer **16** and/or the second skin layer **18,** may comprise a polylactic acid and/or a toughening additive. In one embodiment, the first skin layer **10**, the first transition layer **12**, the core layer **14**, the second transition layer **16** and/or the second skin layer **18**, may comprise from about 60 wt% to about 95 wt% of a polylactic acid having a D-lactic acid level from about 1% to about 8% (by mole). In another embodiment, the first skin layer **10,** the first transition layer **12,** the core layer **14,** the second transition layer **16** and/or the second skin layer **18**, may comprise from about 60 wt% to about 95 wt% of a polylactic acid, having a D-lactic acid level of at least about 8% (by mole). In another embodiment, the first skin layer **10**, the first transition layer **12**, the core layer **14,** the second transition layer **16** and/or the second skin layer **18,** may comprise from about 5 wt% to about **40** wt% of a toughening additive. The toughening additive may enable the film to have an increased elongation to break to facilitate processing. In another embodiment, the polylactic acid and/or the toughening additive may be incorporated into the layer by a masterbatch which includes a polylactic acid and/or a toughening additive. In another embodiment, the polylactic acid and/or a toughening additive is mixed directly into one or more of the layers. Suitable toughening additives are metallocene plastomers (available from Exxon Chemical Co. as Exact 0203); styrene-ethylene-butene-styrene (SEBS) block copolymers (available from Asahi Chemical as Tuftec L515); polyethylene succinate (available from Nippon Shokubai as Lunare SE); polybutylene succinate/carbonate (available from Mitsubishi Gas Chemical as U-Vec); polyethylene; and polyurethane (available from BF Goodrich Chemical Co. as Estane 58246). Suitable polylactic acids EcoPLA 4030D, EcoPLA 4040D, EcoPLA 4050D, and EcoPLA 4060D all available from Dow-Cargill Polymers LLC.

The polylactic acid and/or the toughening additive may be incorporated homogeneously in the first skin layer **10,** the second skin layer **18,** the core layer **14**, the first transition layer **12**, and/or the second transition layer **16**. This can be achieved by either incorporating the polylactic acid and/or the toughening additive as a pellet, a dispersion, or emulsion at room temperature and then heating the blend with the application of shearing forces or by incorporating the additive while the blend is being melted. The mixing temperature must be high enough to soften the blend and enable a very uniform mixture to be formed. The temperature required in a kneader or extruder is generally from about 170° C to about 230° C.

In one embodiment, the first skin layer **10,** the second skin layer **18,** the core layer **14,** the first transition layer **12,** and/or the second transition layer **16** may comprise greater than about 50% by weight of the polylactic acid. In another embodiment, the first skin layer **10,** the second skin layer **18,** the core layer **14,** the first transition layer **12,** and/or the second transition layer **16** may comprise greater than about 60% by weight of the polylactic acid. In another embodiment, the first skin layer **10,** the second skin layer **18,** the core layer **14,** the first transition layer **12,** and/or the second transition layer **16** may comprise from about 70% by weight to about 90% by weight of the polylactic acid. In another embodiment, the first skin layer **10,** the second skin layer **18,** the core layer **14,** the first transition layer **12,** and/or the second transition layer **16** may comprise from about 1% by weight to about 30% by weight of the toughening additive, in another embodiment from about 3% by weight to about 20% by weight of the toughening additive, and in another embodiment from about 5% by weight to about 10% by weight of the toughening additive.

In one embodiment, the exposed first surface **11** and/or second surface **19** are treated in a known and conventional manner, e.g., by corona discharge to improve its receptivity to inks and/or its suitability for such subsequent manufacturing operations as lamination.

In one embodiment, the exposed treated or untreated first surface **11** and/or second surface **19** have applied to it, coating compositions or substrates such as another polymer film or laminate; a metal foil such as aluminum foil; cellulosic webs, e.g. numerous varieties of paper such as corrugated paperboard, craft paper, glassine, cartonboard; non- woven tissue, e.g., spunbonded polyolefin fiber, melt-blown microfibers, etc. The application may employ a suitable adhesive, e.g., a hot melt adhesive such as low density polyethylene, ethylene-methacrylate copolymer, water-based adhesive such as polyvinylidene chloride latex, and the like.

In one embodiment, the film of the present invention is extrusion laminated to another polyolefin film.

In one embodiment, the first skin layer **10**, first transition layer **12**, core layer **14**, second transition layer **16**, and/or second skin layer **18** are coextruded. Thereafter, the film may be biaxially oriented. For example, a machine direction orientation is preferably from about 1.1 to about 6 times and a transverse orientation is preferably from about 2 to about 10 times at a drawing temperature of about 100°C to 138°C to yield a biaxially oriented film. The film thickness is from 0.5 mil to 1.0 mils. A preferred film thickness is from about 0.5 mil to about 5 mils. Specifically the film thickness is from 1 mil to 3 mils. In another embodiment, the film is uniaxially oriented. In another embodiment, the thermoplastic label is uniaxially oriented from about 1.1 to about 6 times in the machine direction.

In another embodiment the first skin layer **10** and/or the second skin layer 18 has a coating or metal layer applied. U.S. Patents 6,077,602; 6,013,353; 5,981,079; 5,972,496; 6,074,762; 6,025,059; and 5,888,648 disclose the use of coatings and/or metal layers on a film, and are disclosed herein by reference. In one embodiment, suitable coatings may include PVdC's or acrylics which serve to boost gloss, enhance machineability, and / or enhance ink adhesion; suitable metals may include aluminum. In another embodiment, the first skin layer **10** and/or the second skin layer **18** are printable. In one embodiment, a coating is applied to the first skin layer **10** and/or the second skin layer **18.** The coating may be selected from the group comprising sulfonated polyester, iminated butyl-acrylate copolymer, iminated alkyl-acrylate copolymers, ionomeric polymer, urethane type copolymer coatings, and acrylic nitrile copolymers.

In one embodiment, the film may be used as a packaging material or label. Any adhesive commonly used in the art may be used to attach the film to itself or another surface. In another embodiment, if the first skin layer **10** and/or the second skin layer **18** comprise a polylactic acid having a D-lactic acid level of at least about 8%, then the film may be attached to itself using a solvent seal technique for a lap seal and/or a fin seal.

Although certain preferred embodiments have been disclosed for the five layer film **50,** three layer film **30,** four layer film **40,** and two layer film **20,** additional embodiments of films with three or more layers are possible by interchanging elements already disclosed that would be clear to one with ordinary skill in the art.

### EXAMPLES

### Example 1 (outside the scope of the claims):

A three layer, A/B/C, biaxially oriented sleeve film is made by tenter frame orientation at 1.35 times in the machine direction and 8 times in the transverse direction. B is a core layer comprising 10 wt% of toughening additive from Union Carbide as Tone-787 and 90 wt% of poly(lactic acid) with D-lactic acid level at 1.3 mole % from Cargill-Dow Polymers LLC as EcoPLA4030D. A and C are skin layers comprising poly(lactic acid) with D-lactic acid level at 10 mole % from Cargill-Dow Polymers LLC as EcoPLA4060D. The core layer thickness is about 42 micron and the skin layer is about 3 micron. The sleeve film is lap-sealed into a tube by THF solvent for sleeve label application.

### Example 2 (outside the scope of the claims):

A three layer, A/B/C, biaxially oriented sleeve film is made by tenter frame orientation at 1.35 times in the machine direction and 8 times in the transverse direction. B is a core layer comprising 10 wt% of toughening additive from Union Carbide as Tone-787 and 90 wt% of poly(lactic acid) with D-lactic acid level at 4.2 mole % from Cargill-Dow polymers LLC as EcoPLA4040D. A and C are skin layers comprising poly(lactic acid) with D-lactic acid level at 10 mole % from Cargill-Dow Polymers LLC as EcoPLA4060D. The core layer thickness is about 42 micron and the skin layer is about 3 micron. The sleeve film is lap-sealed into a tube by THF solvent for sleeve label application.

**Table 1.**

| Film Shrinkage | | |
|---|---|---|
| Sample | Shrinkage at 121.1°C (250°F) for 7 minutes | |
| | MD | TD |
| Example 1 | 5.3 % | 21.3 % |
| Example 2 | 6.0 % | 25.2 % |

### Example 3:

A three layer, A/B/C, biaxially oriented sleeve film is made by tenter frame orientation at 1.35 times in the machine direction and 8 times in the transverse direction. B is a core layer comprising 10 wt% toughening additive from Asahi Chemicals as Tuftec L515 and 90 wt% of poly(lactic acid) with D-latic acid level at 4.2 mole % from Cargill-Dow Polymers LLC as EcoPLA4040D. A and C are skin layers comprising poly(lactic acid) with D-lactic acid label at 10 mole % from Cargill-Dow Polymers LLC as EcoPLA4060D. The core layer thickness is about 30 micron and the skin layer thickness is about 3 micron.

**Table 2.**

| Film Physical Property | | | | | |
|---|---|---|---|---|---|
| Sample | Polymer | Orientation | Toughening Additive | Elongation to break | |
| | | MDxTD | | MD | TD |
| Control | EcoPLA4040D | 1.35x8 | none | 4% | 51% |
| Example-1 | EcoPLA4030D | 1.35x8 | Tone-787 (10%) | 128% | 66% |
| Example-2 | EcoPLA4040D | 1.35x8 | Tone-787 (10%). | 137% | 62% |
| Example-3 | EcoPLA4040D | 1.35x8 | Tuftec L515 (10%) | 171% | 49% |

## Claims

1. A thermoplastic film comprising a core layer comprising 60-95 wt% of a polylactic acid having a D-lactic acid level from 1-8 mol%, and 5-40 wt% of a toughening additive selected from the group consisting of metallocene plastomers, styrene-ethylene-butene-styrene (SEBS) block copolymers, polyethylene succinate, polybutylene succinate/carbonate, polyethylene, polyurethane, and mixtures thereof, wherein the core layer comprises the interior of the film.

2. The thermoplastic film of claim 1 further comprising a first skin layer comprising a polylactic acid having a D-lactic acid level of at least 8 mol%, wherein the first skin layer is exterior to the core layer.

3. The thermoplastic film of claim 2 further comprising a second skin layer comprising a polylactic acid having a D-lactic acid level of at least 8 mol%, wherein the second skin layer is exterior to the core layer, and on a side of the core layer opposite the first skin layer.

4. The thermoplastic film according to claims 2 or 3 wherein either or both skin layers further comprises a slip additive.

5. The thermoplastic film according to any of claims 2-4 wherein either or both skin layers comprise 1-10 wt% of a poly(epsilon-caprolactone).

6. The thermoplastic film according to any of the previous claims wherein the core layer is cavitated.

7. The thermoplastic film of claim 6 wherein the core layer further comprises an inorganic cavitating agent selected from the group consisting of solid glass spheres, hollow glass spheres, metal beads, metal spheres, ceramic spheres, calcium carbonate, and mixtures thereof.

8. The thermoplastic film of claim 7 wherein the cavitating agent comprises calcium carbonate, and wherein the core layer further comprises high density polyethylene.

9. The thermoplastic film according to any of the previous claims wherein the film has a thickness from 25-254 µm (1-10 mils).

10. The thermoplastic film of claim 9 wherein the film has a thickness from 25-127 µm (1-5 mils).

11. The thermoplastic film according to any of the previous claims wherein the film is biaxially oriented.

12. A sleeve label comprising a film according to any of the previous claims.

13. A container comprising a sleeve label according to claim 12.

14. A process for producing a thermoplastic sleeve label comprising the steps of:
a. coextruding a core layer comprising 60-95 wt% of a polylactic acid having a D-lactic acid level from 1-8 mol%, and 5-40 wt% of a toughening additive selected from the group consisting of metallocene plastomers, styrene-ethylene-butene-styrene (SEBS) block copolymers, polyethylene succinate, polybutylene succinate/carbonate, polyethylene, polyurethane, and mixtures thereof and a first skin layer comprising a polylactic acid having a D-lactic acid level of at least 8 mol%, wherein the first skin layer is exterior to the core layer;
b. orienting the label in the machine direction;
c. heat annealing the label; and
d. treating the label with at least one of plasma, corona, and flame treatment.

15. The process of claim 14, further comprising coextruding a second skin layer comprising a polyactic acid having a D-lactic acid level of at least 8 mol%, wherein the second skin layer is exterior to the core layer, and on a side of the core layer opposite the first skin layer.

16. The process according to claims 14 or 15, further comprising of printing the label on a skin layer.

17. The process according to any of claims 14-16 further comprising the step of orienting the label in the transverse direction.

18. The process according to any of claims 14-17, further comprising the step of forming the label into a tube and sealing the label with a seal selected from the group consist ing of solvent seal, heat seal, ultrasonic seal, and adhesive seal.

19. The process according to any of claims 14-18 further comprising the steps of:
a. placing the tube onto a container; and
b. shrinking the tube with the application of at least one of heat and UV light.

## Patentansprüche

1. Thermoplastische Folie, die eine Kernschicht aufweist, die 60 bis 95 Gew.% Polymilchsäure mit einem Gehalt an D-Milchsäure von 1 bis 8 Mol% und 5 bis 40 Gew.% zähmachendes Additiv ausgewählt aus der Gruppe bestehend aus Metallocenplastomeren, Styrol/Ethylen/Buten/Styrol-Blockcopolymeren (SEBS), Polyethylensuccinat, Polybutylensuccinat/carbonat, Polyethylen, Polyurethan und Mischungen davon umfasst, wobei die Kernschicht das Innere der Folie umfasst.

2. Thermoplastische Folie nach Anspruch 1, die ferner eine Polymilchsäure mit einem Gehalt an D-Milchsäure von mindestens 8 Mol% umfassende erste Hautschicht umfasst, wobei die erste Hautschicht außen von der Kernschicht ist.

3. Thermoplastische Folie nach Anspruch 2, die ferner eine Polymilchsäure mit einem Gehalt an D-Milchsäure von mindestens 8 Mol% umfassende zweite Hautschicht umfasst, wobei die zweite Hautschicht außen von der Kernschicht und auf einer der ersten Hautschicht gegenüberliegenden Seite der Kernschicht ist.

4. Thermoplastische Folie nach Ansprüchen 2 oder 3, wobei eine oder beide Hautschichten ferner Gleitadditiv umfasst oder umfassen.

5. Thermoplastische Folie nach einem der Ansprüche 2 bis 4, wobei eine oder beide Hautschichten 1 bis 10 Gew.% Poly(∈-Caprolacton) umfasst oder umfassen.

6. Thermoplastische Folie nach einem der vorhergehenden Ansprüche, wobei die Kernschicht mit Hohlräumen versehen ist.

7. Thermoplastische Folie nach Anspruch 6, wobei die Kernschicht ferner anorganisches Kavitierungsmittel ausgewählt aus der Gruppe bestehend aus festen Glaskugeln, hohlen Glaskugeln, Metallperlen, Metallkugeln, keramischen Kugeln, Calciumcarbonat und Mischungen davon umfasst.

8. Thermoplastische Folie nach Anspruch 7, wobei das Kavitierungsmittel Calciumcarbonat umfasst und wobei die Kernschicht ferner Polyethylen hoher Dichte umfasst.

9. Thermoplastische Folie nach einem der vorhergehenden Ansprüche, die eine Dicke von 25 bis 254 µm (1 bis 10 mil) besitzt.

10. Thermoplastische Folie nach Anspruch 9, die eine Dicke von 25 bis 127 µm (1 bis 5 mil) besitzt.

11. Thermoplastische Folie nach einem der vorhergehenden Ansprüche, die biaxial orientiert ist.

12. Sleeve-Etikett, das eine Folie gemäß einem der vorhergehenden Ansprüche umfasst.

13. Behälter, der ein Sleeve-Etikett gemäß Anspruch 12 umfasst.

14. Verfahren zur Herstellung eines thermoplastischen Sleeve-Etiketts, bei dem:
a. eine Kernschicht, die 60 bis 95 Gew.% Polymilchsäure mit einem Gehalt an D-Milchsäure von 1 bis 8 Mol% und 5 bis 40 Gew.% zähmachendes Additiv ausgewählt aus der Gruppe bestehend aus Metallocenplastomeren, Styrol/Ethylen/Buten/Styrol-Block-Copolymeren (SEBS), Polyethylensuccinat, Polybutylensuccinat/carbonat, Polyethylen, Polyurethan und Mischungen davon umfasst, und eine Polymilchsäure mit einem Gehalt an D-Milchsäure von mindestens 8 Mol% umfassende erste Hautschicht koextrudiert werden, wobei die erste Hautschicht außen von der Kernschicht ist,
b. das Etikett in der Maschinenrichtung orientiert wird,
c. das Etikett thermofixiert wird,
d. das Etikett mit mindestens einer von Plasma-, Koronaund Flammenbehandlung behandelt wird.

15. Verfahren nach Anspruch 14, bei dem ferner eine Polymilchsäure mit einem Gehalt an D-Milchsäure von mindestens 8 Mol% umfassende zweite Hautschicht koextrudiert wird, wobei die zweite Hautschicht außen von der Kernschicht und auf einer der ersten Hautschicht gegenüberliegenden Seite der Kernschicht ist.

16. Verfahren nach Ansprüchen 14 oder 15, bei dem das Etikett ferner auf einer Hautschicht bedruckt wird.

17. Verfahren nach einem der Ansprüche 14 bis 16, bei dem das Etikett ferner in der Querrichtung orientiert wird.

18. Verfahren nach einem der Ansprüche 14 bis 17, bei dem das Etikett ferner zu einer Röhre geformt wird und das Etikett mit einem Siegel ausgewählt aus der Gruppe bestehend aus Lösungsmittelsiegel, Wärmesiegel, Ultraschallsiegel und Klebesiegel gesiegelt wird.

19. Verfahren nach einem der Ansprüche 14 bis 18, bei dem ferner
a. die Röhre auf einen Behälter platziert wird und
b. die Röhre durch Anwendung von mindestens einem von Wärme und UV-Licht geschrumpft wird.

## Revendications

1. Film thermoplastique comprenant une couche centrale qui comprend 60 à 95 % en poids d.'un acide polylactique ayant une teneur en acide D-lactique de 1 à 8 % en moles et 5 à 45 % en poids d'un additif de ténacité choisi dans le groupe consistant en des plastomères produits au moyen de métallocènes, des copolymères séquencés styrène-éthylène-butène-styrène (SEBS), le poly(succinate d'éthylène), le poly(succinate/carbonate de butylène), le polyéthylène, le polyuréthanne et leurs mélanges, dans lequel la couche centrale constitue l'intérieur du film.

2. Film thermosplastique suivant la revendication 1, comprenant en outre une première pellicule comprenant un acide polylactique ayant une teneur en acide D-lactique d'au moins 8 % en moles, dans lequel la première pellicule est située à l'extérieur par rapport à la couche centrale.

3. Film thermoplastique suivant la revendication 2, comprenant en outre une seconde pellicule comprenant un acide polylactique ayant une teneur en acide D-lactique d'au moins 8 % en moles, dans lequel la seconde pellicule est située à l'extérieur par rapport à la couche centrale et sur une face de la couche centrale opposée à la première pellicule.

4. Film thermoplastique suivant la revendication 2 ou 3, dans lequel l'une de ou les deux pellicules comprennent, en outre, un additif de glissement.

5. Film thermoplastique suivant l'une quelconque des revendications 2 à 4, dans lequel l'une de ou les deux pellicules comprennent 1 à 10 % en poids de poly(epsilon-caprolactone).

6. Film thermoplastique suivant l'une quelconque des revendications précédentes, dans lequel la couche centrale présente des cavitations.

7. Film thermoplastique suivant la revendication 6, dans lequel la couche centrale comprend en outre un agent inorganique de cavitation choisi dans le groupe consistant en des sphères pleines de verre, des sphères creuses de verre, des billes métalliques, des sphères métalliques, des sphères céramiques, le carbonate de calcium et leurs mélanges.

8. Film thermoplastique suivant la revendication 7, dans lequel l'agent de cavitation comprend du carbonate de calcium, et dans lequel la couche centrale comprend en outre du polyéthylène haute densité.

9. Film thermoplastique suivant l'une quelconque des revendications précédentes, ledit film ayant une épaisseur de 25 à 254 µm (1 à 10 mil).

10. Film thermoplastique suivant la revendication 9, ledit film ayant une épaisseur de 25 à 127 µm (1 à 5 mil).

11. Film thermoplastique suivant l'une quelconque des revendications précédentes, ledit film présentant une orientation biaxiale.

12. Etiquette en forme de manchon, comprenant un film suivant l'une quelconque des revendications précédentes.

13. Récipient comprenant une étiquette en forme de manchon suivant la revendication 12.

14. Procédé pour la production d'une étiquette thermoplastique en forme de manchon, comprenant les étapes :
a. de coextrusion d'une couche centrale comprenant 60 à 95 % en poids d'un acide polylactique ayant une teneur en acide D-lactique de 1 à 8 % en moles, et 5 à 40 % en poids d'un additif de ténacité choisi dans le groupe consistant en des plastomères produits au moyen de métallocènes, des copolymères séquencés styrène-éthylène-butène-styrène (SEBS), le poly(succinate d'éthylène), le poly(succinate/carbonate de butylène), le polyéthylène, le polyuréthanne et leurs mélanges, et une première pellicule comprenant un acide polylactique ayant une teneur en acide D-lactique d'au moins 8 % en moles, la première pellicule étant située à l'extérieur par rapport à la couche centrale.
b. d'orientation de l'étiquette dans la direction machine ;
c. de recuit thermique de l'étiquette ; et
d. de traitement de l'étiquette par au moins un des traitements consistant en un traitement par plasma, un traitement par effluve et un traitement par flamme.

15. Procédé suivant la revendication 14, comprenant en outre la coextrusion d'une seconde pellicule comprenant un acide polylactique ayant une teneur en acide D-lactique d'au moins 8 % en moles, dans lequel la seconde pellicule est située à l'extérieur par rapport à la couche centrale, et sur une face de la couche centrale opposée à la première pellicule.

16. Procédé suivant la revendication 14 ou 15, comprenant en outre l'impression de l'étiquette sur une pellicule.

17. Procédé suivant l'une quelconque des revendications 14 à 16, comprenant en outre l'étape d'orientation de l'étiquette dans la direction transversale.

18. Procédé suivant l'une quelconque des revendications 14 à 17, comprenant en outre l'étape de transformation de l'étiquette en un tube et de soudage de l'étiquette avec une soudure choisie dans le groupe consistant en une soudure produite avec un solvant, une thermosoudure, une soudure ultrasonique et une soudure adhésive.

19. Procédé suivant l'une quelconque des revendications 14 à 18, comprenant en outre les étapes :
a. de mise en place du tube sur un récipient ; et
b. de retrait du tube par application d'au moins un des moyens consistant en la chaleur et la lumière UV.
